# FASCICULE DE BREVET EUROPEEN

(11) **EP 1 744 653 B1**
(45) Date de publication et mention de la délivrance du brevet: **31.10.2007**
(21) Numéro de dépôt: 05733284.3
(22) Date de dépôt: 02.05.2005
(51) Int. Cl.: A47J 31/46, A47J 31/06

(54) **DISPOSITIF GENERATEUR D'AU MOINS UN JET D'UNE BOISSON ET DISTRIBUTEUR DE BOISSON EQUIPE DE CE DISPOSITIF**
VORRICHTUNG ZUR ERZEUGUNG ZUMINDEST EINES GETRÄNKESTRAHLS UND GETRÄNKEAPPARAT MIT EINER SOLCHEN VORRICHTUNG
DEVICE FOR GENERATING AT LEAST ONE BEVERAGE JET AND A BEVERAGE DISPENSER PROVIDED WITH SAID DEVICE

(30) Priorité: 07.05.2004 CH 808042004
(43) Date de publication de la demande: 24.01.2007
(73) Titulaire: Domteknika S.A., 2520 La Neuveville (CH)
(72) Inventeur: THULIEZ, Jean-Luc, CH-2525 Le Landeron (CH)
(74) Mandataire: Nithardt, Roland
(86) Numéro de dépôt international: PCT/CH2005/000244
(87) Numéro de publication internationale: WO 2005/107541

(56) Documents cités:
- EP-A- 1 371 311
- DE-U1- 20 206 545
- US-A- 5 150 645
- US-A- 5 638 740

## Description

### Domaine technique

La présente invention concerne un dispositif générateur d'au moins un jet d'une boisson, notamment d'une boisson chaude, comportant une unité de production d'eau sous pression, un support agencé pour porter une pochette perméable à cette eau, contenant une substance à infuser ou à dissoudre pour produire une infusion ou une solution de cette substance lors du passage de l'eau sous pression à travers cette pochette, un collecteur de cette infusion ou de cette solution sous pression et des moyens pour propulser cette infusion ou cette solution dans un récipient.

Elle concerne également un distributeur de boisson, notamment d'une boisson chaude, équipé de ce dispositif.

### Technique antérieure

Les machines à café domestiques actuelles fonctionnent en général sous des pressions de l'ordre de 7 à 20 bars pour infuser la poudre de café moulu. Elles utilisent cette pression contre une grille fine ou une pièce en métal fritté ou une soupape pour créer de la mousse ou un récipient intermédiaire. L'inconvénient des machines à haute pression est leur prix élevé dû essentiellement à la complexité des composants haute pression.

En ce qui concerne les machines à basse pression dont le prix est sensiblement plus bas, quelques tentatives ont été faites pour obtenir un café mousseux. L'une de ces réalisations est décrite dans la publication européenne EP 0 878 158 A2 qui décrit une machine à café dans laquelle le café extrait par infusion de poudre de café moulu contenu dans une pochette interposée sur la trajectoire de l'eau chaude, est injecté sous pression dans un récipient intermédiaire, avant de s'écouler librement dans une tasse. Cette injection dans un récipient intermédiaire a pour effet de produire une mousse résiduelle qui flotte à la surface de l'infusion.

L'inconvénient de ce système est la conséquence de l'injection de l'infusion de café dans le récipient intermédiaire qui conserve toujours un résidu de cette infusion qui sera entraîné au moment de la production du café suivant. Toutefois, si l'intervalle de temps entre la production de deux tasses de café est long, le résidu de l'infusion de la poudre de café sèche en encrassant la machine. En outre, cette machine ne se prête pas à une utilisation du type "multiboissons". En effet, le résidu d'infusion de café qui stagne dans le récipient intermédiaire se mélange à la préparation suivante qui peut être du thé ou du chocolat en altérant la qualité de cette préparation. De même il est impensable de réaliser un lait chaud, une soupe ou une autre préparation avec une telle machine qui est exclusivement dédiée à la préparation d'une infusion de café.

Un autre inconvénient lié à ce type de machine est le refroidissement dû au long cheminement du café avant qu'il n'arrive dans la tasse, car la température d'extraction en amont étant constante, le chemin rallongé provoque une perte non désirable de calories à l'arrivée de la boisson dans la tasse. En outre, le contenu résiduel du récipient refroidit systématiquement le contenu de la tasse suivante.

Sur le plan pratique ces machines ont un encombrement élevé et le nombre d'éléments à nettoyer entre deux cessions de cafés est contraignant.

### Exposé de l'invention

Le but de l'invention est de réaliser un dispositif simple capable de générer un jet de liquide, notamment d'une infusion, par exemple d'une infusion de café ou de thé, mais également d'une solution, par exemple de cacao, de chocolat, de lait en poudre ou de toute préparation liquide ou poudreuse soluble dans de l'eau, présentant un aspect mousseux, ne laissant subsister aucun résidu et permettant de produire sans aucune adaptation ou nettoyage intermédiaire, des boissons variées chaudes ou froides.

Ce but est atteint par un dispositif selon l'invention tel que défini en préambule et caractérisé en ce qu'il comporte un générateur d'au moins un jet cyclonique interposé entre ledit collecteur de cette infusion ou de cette solution et lesdits moyens pour déverser cette infusion ou cette solution directement dans un récipient.

Selon un mode de réalisation avantageux, ledit générateur d'au moins un jet cyclonique comporte une cavité centrale au moins partiellement cylindrique délimitée par une paroi latérale et un fond, la paroi latérale définissant au moins un passage pour un jet sous pression de cette infusion ou de cette solution pénétrant dans ladite cavité, ce passage étant orienté vers le côté de la paroi latérale opposé à celui où il se trouve pour générer ledit jet cyclonique.

De préférence, la pression de l'eau est au minimum sensiblement égale à 0,5 bar.

De façon avantageuse ledit fond de la cavité centrale est pourvu d'une ouverture circulaire sensiblement centrale pour libérer ledit jet cyclonique vers lesdits moyens pour déverser cette infusion ou cette solution dans un récipient.

De préférence, ladite ouverture centrale circulaire de la cavité au moins partiellement cylindrique est agencée pour libérer ledit jet cyclonique selon un angle d'ouverture sensiblement compris entre 60 et 150 degrés et de préférence voisin de 120 degrés.

Selon un mode de réalisation préférentiel, lesdits moyens pour déverser cette infusion ou cette solution dans un récipient comportent une tuyère sensiblement cylindrique ayant une paroi latérale agencée pour réfléchir ledit jet cyclonique à la sortie de ladite ouverture centrale circulaire.

De façon avantageuse, la longueur de ladite tuyère est agencée pour que ledit jet cyclonique soit réfléchi au moins une fois avant de se déverser dans ledit récipient. De préférence, la longueur de ladite tuyère est définie en fonction du nombre de réflexions désirées du jet cyclonique, ce nombre de réflexions étant déterminé à partir de la taille des bulles de mousse souhaitée

Selon un premier mode de construction, ledit passage dans la paroi latérale du générateur agencé pour générer ledit jet cyclonique a un axe longitudinal sensiblement parallèle à l'axe de ladite ouverture centrale circulaire.

Selon un second mode de construction, ledit passage dans la paroi latérale de du générateur agencé pour générer ledit jet cyclonique a un axe longitudinal formant un angle aigu avec l'axe de ladite ouverture centrale circulaire.

D'une manière particulièrement avantageuse, ladite paroi latérale du générateur agencé pour générer ledit jet cyclonique définit au moins deux passages opposés pour deux jets sous pression de cette infusion ou de cette solution, ces deux jets étant sensiblement opposés et pénétrant dans ladite cavité centrale, chacun de ces passages étant orienté vers le côté opposé au côté de la paroi latérale dans laquelle il est ménagé pour combiner son effet à celui de l'autre passage et générer ledit jet cyclonique:

Chacun des deux jets sensiblement opposés générés par les passages opposés est de préférence orienté vers le côté opposé au côté de la paroi latérale d'où il est généré sous un angle aigu, la paroi latérale de ladite cavité au moins partiellement cylindrique étant agencée pour réfléchir lesdits jets sensiblement opposés de façon sensiblement symétrique par rapport à ladite ouverture sensiblement centrale ménagée dans le fond de ladite pièce pourvue de ladite cavité centrale.

Selon un mode de réalisation particulièrement avantageux, le générateur d'au moins un jet cyclonique est monté sous ledit support de ladite pochette contenant une substance à infuser ou à dissoudre, ce support comportant un noyau cylindrique qui est partiellement engagé dans cette cavité centrale en ménageant au moins deux passages dans la paroi latérale dudit générateur, ces passages étant sensiblement symétriques par rapport à ladite ouverture centrale circulaire et communiquant d'une part avec au moins un orifice ménagé dans ledit collecteur de l'infusion ou de la solution et d'autre part respectivement avec au moins deux canaux ménagés dans ledit fond du générateur et débouchant dans ladite cavité centrale circulaire.

Dans toutes les formes de réalisation du dispositif, le fond du support de la pochette à infuser est réalisé en un matériau élastique déformable sous la pression appliquée sur ladite pochette pendant l'infusion.

### Description sommaire des dessins

La présente invention et ses avantages seront mieux compris à la lecture de la description détaillée d'une forme de mise en oeuvre du dispositif selon l'invention, en référence aux dessins annexés donnés à titre indicatif et non limitatif, dans lesquels :
- la figure 1 est une vue en coupe représentant une forme de réalisation préférée du dispositif selon l'invention,
- la figure 2 est une vue en perspective, partiellement coupée, représentant le dispositif de la figure 1,
- la figure 3 est une vue partielle en coupe du dispositif selon l'invention,
- la figure 4 est une vue partielle de dessus du dispositif selon l'invention tel que représenté par la figure 1, et
- les figures 5 à 7 illustrent différentes formes de réalisation du générateur du jet cyclonique du dispositif selon l'invention.

### Manière(s) de réaliser l'invention

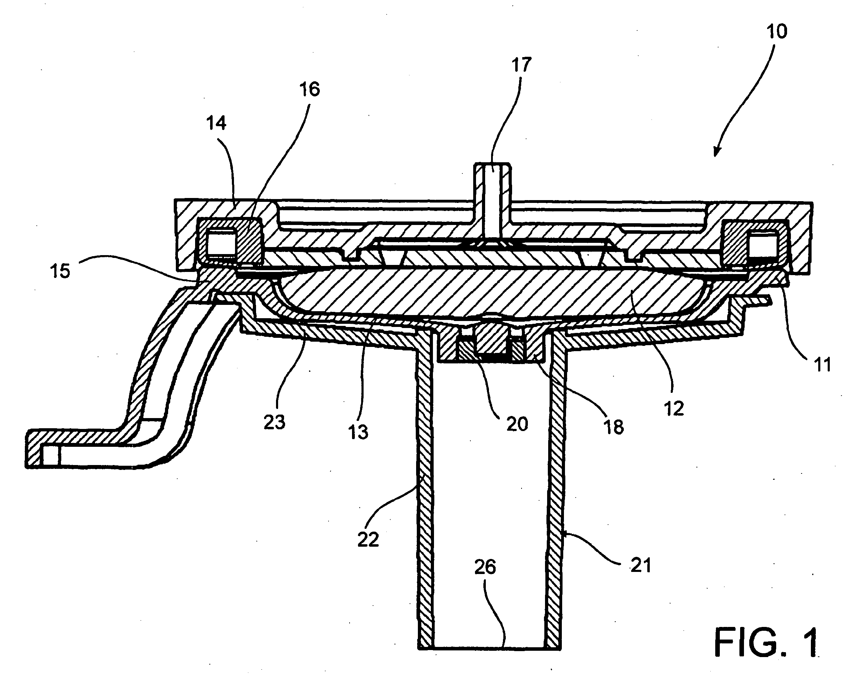

En référence à la figure 1, le dispositif générateur d'au moins un jet d'une boisson selon l'invention est représenté comme une partie d'une machine à café à basse pression. Ce dispositif est applicable à la préparation d'autres boissons chaudes ou à celle de boissons froides. L'ensemble de la machine n'est pas représenté, étant donné que ce dispositif pourrait être monté dans diverses machines du même type. Son but principal est de produire une infusion ou une solution de cette substance lors du passage de l'eau sous pression à travers une pochette perméable à cette eau, contenant une substance à infuser ou à dissoudre et à verser cette infusion ou cette solution dans un récipient avec une couche de mousse, ce qui est particulièrement important lorsque la boisson est une infusion de poudre de café.

Ce dispositif 10 comporte essentiellement un support 11 agencé pour porter une pochette 12 faite de deux feuilles d'un matériau perméable à l'eau, soudées sur leur pourtour et contenant une substance à infuser ou à dissoudre, telle que de la poudre de café, du thé, du lait en poudre, du chocolat en poudre ou en solution, de la soupe ou similaires. Ce support 11 est réalisé en une matière élastique et son fond 13 a une épaisseur telle qu'il puisse se déformer sous l'action d'une pression minimum sensiblement égale à 0,5 bar et revenir dans sa forme initiale lorsque cette pression n'est plus appliquée. Un couvercle 14 est posé sur le support 11, serré contre le bord 15 dudit support par l'intermédiaire d'un joint d'étanchéité annulaire 16. De cette manière, ladite pochette 12 est enfermée à l'intérieur d'un espace fermé communiquant avec une arrivée d'eau sous pression 17 ménagée au centre du couvercle 14 et avec un collecteur 18 agencé pour récupérer l'infusion ou la solution après le passage de l'eau à travers la pochette 12. Dans l'exemple représenté, le collecteur 18 est solidaire du support 11 et constitue la partie centrale de ce support. Ce collecteur pourrait être une pièce distincte et remplir les mêmes fonctions.

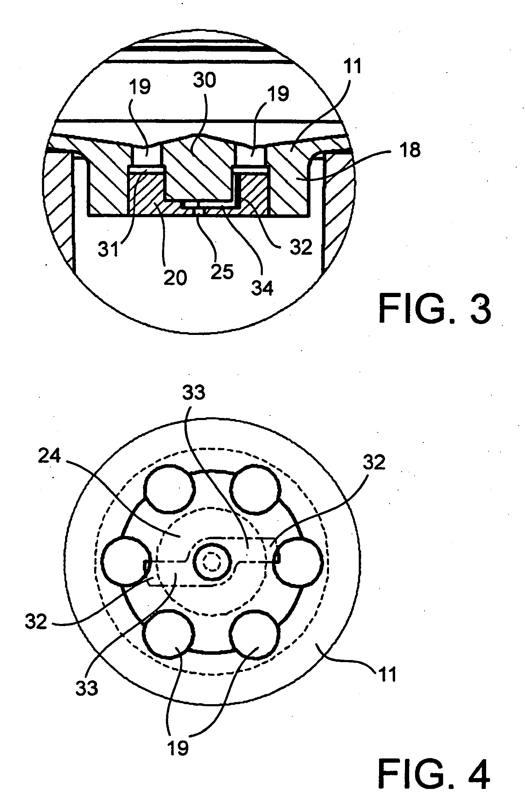

Le collecteur 18 est pourvu d'un ensemble de trous 19, par exemple disposés en cercle, comme le montre la figure 4, où le nombre de trous est de six, régulièrement disposés autour du centre du support 11.

Le dispositif 10 comporte par ailleurs un générateur 20 d'au moins un jet cyclonique de liquide, illustré plus en détail sur les figures 3 et 4, et permettant d'obtenir une boisson ayant un aspect mousseux. Ce générateur 20 est interposé entre ledit collecteur 18 de l'infusion ou de la solution et des moyens 21 pour déverser cette infusion ou cette solution dans un récipient (non représenté). Ces moyens sont essentiellement constitués d'une tuyère 22 de forme cylindrique qui est solidaire d'un élément 23 porteur du support 11 et centrée par rapport à ce dernier.

Le générateur 20 est en outre agencé pour créer une restriction de débit due au temps d'écoulement rallongé par la mise en rotation du fluide à haute vitesse. Ce ralentissement de débit favorise une montée en pression de l'espace fermé dans lequel se trouve la pochette 12 permettant ainsi une extraction à plus haute pression durant l'infusion et ceci sans soupape ou pièce mobile, ni grille. Cette réalisation permet ainsi de supprimer le nettoyage actuellement indispensable lorsqu'on passe d'un type de boisson à un autre, par exemple d'un café à une soupe. En outre, le fait que le fond du support 11 soit élastiquement déformable a pour but, lorsque l'on applique la pression d'eau sur la pochette 12 et que ce fond prend alors une forme concave, d'obtenir une meilleure extraction du volume de produit contenu dans la pochette. Lorsque la pression cesse, le fond 13 reprend sa position initiale en créant une contre-pression sur la pochette qui provoque un "essorage" du volume résiduel d'infusion, ce qui évite un remplissage du système de diffusion et permet aussi de passer d'une boisson à l'autre sans mélange.

Le générateur 20 comporte une cavité centrale sensiblement cylindrique 24 dans le fond de laquelle est ménagée une ouverture centrale circulaire 25 qui émet un jet de l'infusion ou de la solution préparée ayant sensiblement une forme de cône dont l'ouverture est comprise entre 60 et 150 degrés et de l'ordre de 120 degrés. Ce jet est réfléchi par la paroi latérale de la tuyère 22 et s'écoule finalement par l'orifice de sortie 26 de cette tuyère directement vers le récipient destiné à recevoir la boisson.

Le support 11 de la pochette 12 comporte en son centre un noyau central 30 qui est partiellement engagé dans la cavité centrale 24 du générateur 20. Les trous 19 du collecteur 18 sont disposés en cercle autour de ce noyau central et permettent l'écoulement de l'infusion ou de la solution vers un espace 31 (figure 3) délimité par la surface supérieure annulaire du générateur 20. Le générateur 20 comporte en outre au moins une rainure latérale 32 définissant un passage du liquide dans sa paroi latérale, dont l'axe longitudinal peut être parallèle à l'axe de l'ouverture centrale circulaire 25 ou peut former un angle aigu avec ledit axe. Dans la forme de réalisation préférée illustrée plus particulièrement par la figure 4, le générateur 20 comporte deux rainures latérales 32 débouchant dans deux canaux 33, sensiblement parallèles à un diamètre de la cavité centrale du générateur 20, ménagés dans le fond dudit générateur et amenant l'infusion ou la solution dans un espace 34 de formation du jet cyclonique disposé entre le fond de ladite cavité centrale 24 et ledit noyau central 30 partiellement engagé dans cette cavité. Les deux canaux 33 sont décalés et dirigent respectivement les jets correspondants vers les parois opposées de manière à mettre le liquide en rotation et provoquer ainsi un jet cyclonique. La turbulence de ces jets provoque un mélange par friction de l'infusion ou de la solution avec de l'air et engendre une mousse qui se déposera en surface dans le récipient récepteur.

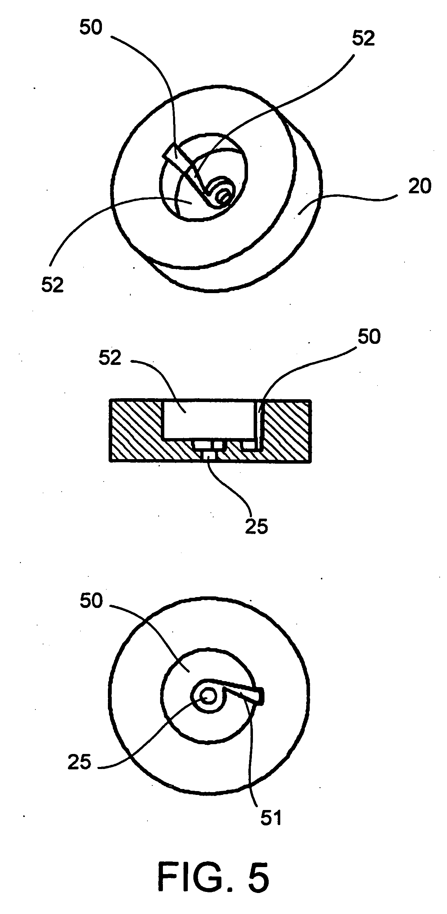

Les figures 5, 6 et 7 représentent des variantes de réalisation du générateur 20 de jet cyclonique respectivement en perspective, en coupe transversale et en vue de dessus.

Le générateur 20 représenté par la figure 5 comporte une rainure latérale unique 50 qui débouche dans un canal unique 51 pour amener l'infusion ou la solution dans la cavité centrale 52 du générateur, ce canal étant orienté selon un rayon de ladite cavité. Le jet de cette infusion ou de cette solution se brise sur la paroi latérale opposée à l'entrée du canal 51 et forme un jet réfléchi qui génère un jet tourbillonnaire ou cyclonique où l'infusion ou la solution se charge en air sous la forme de bulles de très faibles dimensions qui créent un mélange mousseux qui sera évacué par l'ouverture centrale 25 débouchant dans la tuyère des moyens de déversement de la boisson dans un récipient.

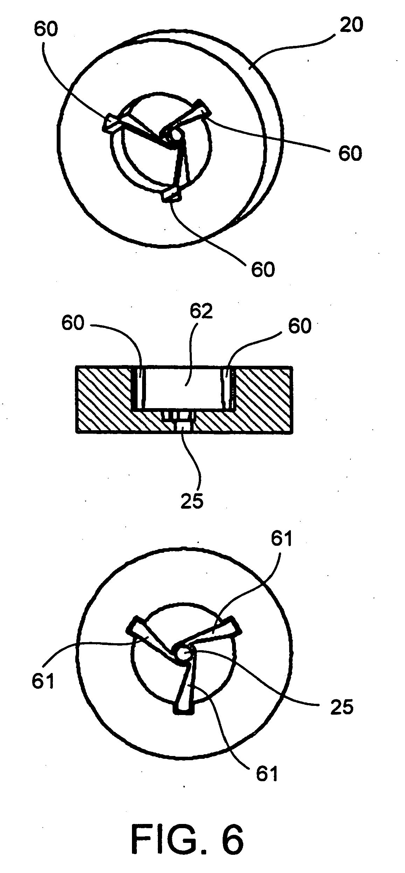

Dans la forme de réalisation illustrée par la figure 6, le générateur 20 comporte trois canaux 61 coopérant avec trois rainures latérales 60 ménagées dans la paroi latérale de la cavité 62 du générateur 20. Comme précédemment les jets de cette infusion ou de cette solution sont réfléchis sur les parois latérales opposées et génèrent un jet tourbillonnaire ou cyclonique où l'infusion ou la solution se charge en air sous la forme de bulles de très faibles dimensions qui crée un mélange mousseux qui sera évacué par l'ouverture centrale 25.

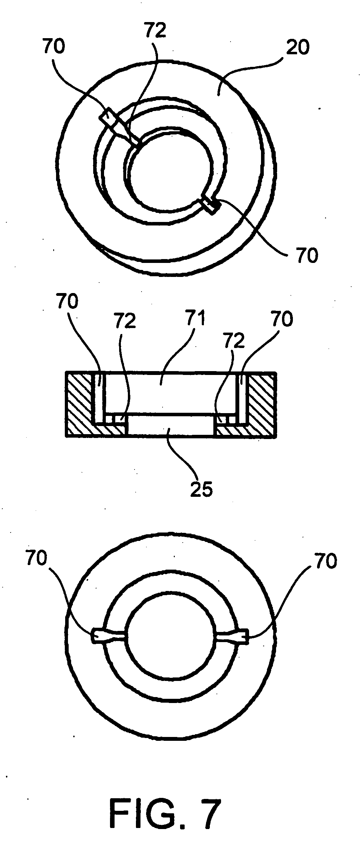

La figure 7 illustre une variante de réalisation dans laquelle le générateur 20 comporte uniquement deux rainures latérales 70 disposées à chacune des extrémités d'un diamètre de la cavité centrale 71. Le fond de cette cavité est formé par une surface annulaire définissant une grande ouverture centrale 24. Cette surface annulaire est pourvue de deux petites gorges 72 diamétralement opposées situées au débouché des rainures latérales 70 dans ladite surface annulaire. Dans cette forme de réalisation, les jets arrivent simultanément à haute vitesse face à face et génèrent ainsi un liquide mousseux qui s'écoule directement dans le récipient, sans réflexions sur la paroi intérieure de la tuyère des moyens de déversement, c'est-à-dire sans salir cette paroi.

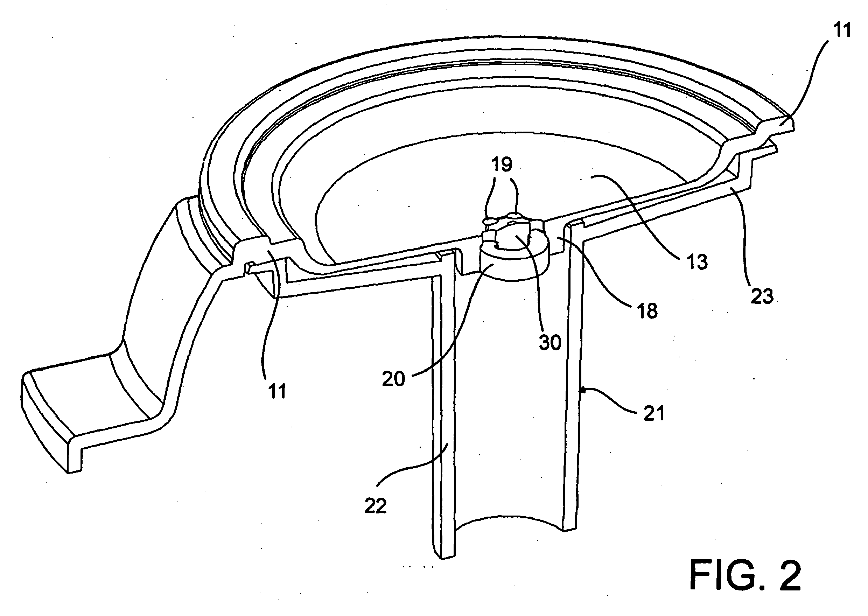

Quelle que soit la forme de réalisation du générateur, il se forme un jet cyclonique qui génère de la mousse. Cet effet est complété dans les formes de réalisations illustrées par les figures 1 à 6 par les réflexions multiples du jet sortant de l'ouverture centrale 25 sur les parois de la tuyère 22. La longueur de ladite tuyère est définie en fonction du nombre de réflexions désirées du jet cyclonique, ce nombre de réflexions étant déterminé à partir de la taille des bulles de mousse souhaitée. Le jet cyclonique émergeant de l'ouverture centrale 25 perd de sa puissance dans cette tuyère et aboutit à un écoulement modéré en puissance et en amplitude, notamment avec un angle d'ouverture réduit au niveau du récipient tel que par exemple une tasse ou un gobelet.

Toutes les géométries et le nombre des canaux ménagés dans le fond du générateur de jets cycloniques sont envisageables pour obtenir l'effet recherché, à savoir la génération de fines bulles d'air dans l'infusion ou la solution.

## Revendications

1. Dispositif (10) générateur d'au moins un jet d'une boisson, notamment d'une boisson chaude comportant une unité de production d'eau sous pression, un support (11) agencé pour porter une pochette (12) perméable à cette eau, contenant une substance à infuser ou à dissoudre pour produire une infusion ou une solution de cette substance lors du passage de l'eau sous pression à travers cette pochette (12), un collecteur (18) de cette infusion ou de cette solution sous pression et des moyens (21) pour propulser cette infusion ou cette solution dans un récipient, **caractérisé en ce qu'**il comporte un générateur (20) d'au moins un jet cyclonique interposé entre ledit collecteur (18) de cette infusion ou de cette solution et lesdits moyens (21) pour déverser cette infusion ou cette solution dans un récipient.

2. Dispositif selon la revendication 1, **caractérisé en ce que** ledit générateur (20) d'au moins un jet cyclonique comporte une cavité centrale (24) au moins partiellement cylindrique délimitée par une paroi latérale et un fond, la paroi latérale définissant au moins un passage (32) pour un jet sous pression de cette infusion ou de cette solution pénétrant dans ladite cavité (24), ce passage (32) étant orienté vers le côté de la paroi latérale opposé à celui où il se trouve pour générer ledit jet cyclonique.

3. Dispositif selon la revendication 1, **caractérisé en ce que** la pression de l'eau est au minimum sensiblement égale à 0,5 bar.

4. Dispositif selon la revendication 2, **caractérisé en ce que** ledit fond de la cavité centrale est pourvu d'une ouverture circulaire (25) sensiblement centrale pour libérer ledit jet cyclonique vers lesdits moyens (21) pour déverser cette infusion ou cette solution dans un récipient.

5. Dispositif selon la revendication 4, **caractérisé en ce que** ladite ouverture centrale circulaire (25) de la cavité (24) au moins partiellement cylindrique est agencée pour libérer ledit jet cyclonique selon un angle d'ouverture sensiblement compris entre 60 et 150 degrés et de préférence voisin de 120 degrés.

6. Dispositif selon les revendications 1 et 4, **caractérisé en ce que** lesdits moyens (21) pour déverser cette infusion ou cette solution dans un récipient comportent une tuyère (22) sensiblement cylindrique ayant une paroi latérale agencée pour réfléchir ledit jet cyclonique à la sortie de ladite ouverture centrale circulaire (25).

7. Dispositif selon la revendication 6, **caractérisé en ce que** la longueur de ladite tuyère (22) est agencée pour que ledit jet cyclonique soit réfléchi au moins une fois avant de se déverser dans ledit récipient.

8. Dispositif selon la revendication 7, **caractérisé en ce que** la longueur de ladite tuyère (22) est définie en fonction du nombre de réflexions désirées du jet cyclonique, ce nombre de réflexions étant déterminé à partir de la taille des bulles de mousse souhaitée.

9. Dispositif selon la revendication 2, **caractérisé en ce que** ledit passage (32) dans la paroi latérale du générateur (20) agencé pour générer ledit jet cyclonique a un axe longitudinal sensiblement parallèle à l'axe de ladite ouverture centrale circulaire (25).

10. Dispositif selon la revendication 2, **caractérisé en ce que** ledit passage (32) dans la paroi latérale du générateur (20) agencé pour générer ledit jet cyclonique a un axe longitudinal formant un angle aigu avec l'axe de ladite ouverture centrale circulaire (25).

11. Dispositif selon la revendication 2, **caractérisé en ce que** ladite paroi latérale du générateur (20) agencé pour générer ledit jet cyclonique définit au moins deux passages opposés (33) pour deux jets sous pression de cette infusion ou de cette solution, ces deux jets étant sensiblement opposés et pénétrant dans ladite cavité centrale (24), chacun de ces passages (33) étant orienté vers le côté opposé au côté de la paroi latérale dans laquelle il est ménagé pour combiner son effet à celui de l'autre passage et générer ledit jet cyclonique.

12. Dispositif selon la revendication 11, **caractérisé en ce que** chacun des deux jets sensiblement opposés générés par les passages opposés (33) est orienté vers le côté opposé au côté de la paroi latérale d'où il est généré sous un angle aigu, la paroi latérale de ladite cavité (24) étant agencée pour réfléchir lesdits jets sensiblement opposés de façon sensiblement symétrique par rapport à ladite ouverture centrale circulaire (25) ménagée dans le fond du générateur (20).

13. Dispositif selon les revendications 1 et 2, **caractérisé en ce que** ledit générateur (20) d'au moins un jet cyclonique est monté sous ledit support (11) de ladite pochette (12) contenant une substance à infuser ou à dissoudre, ce support (11) comportant un noyau cylindrique (30) qui est partiellement engagé dans la cavité centrale (24) du générateur (20) en ménageant au moins deux passages (32) dans la paroi latérale dudit générateur, ces passages étant sensiblement symétriques par rapport à ladite ouverture centrale circulaire (25) et communiquant d'une part avec au moins un orifice ménagé dans ledit collecteur (18) de l'infusion ou de la solution et d'autre part respectivement avec au moins deux canaux (33) ménagés dans ledit fond du générateur (20) et débouchant dans ladite cavité centrale circulaire (25).

14. Dispositif selon la revendication 1, **caractérisé en ce que** le fond (13) du support (11) de la pochette (12) à infuser est réalisé en un matériau élastique déformable sous la pression appliquée sur ladite pochette pendant l'infusion.

15. Distributeur de boissons équipé d'un dispositif (10) générateur d'au moins un jet d'une boisson, notamment d'une boisson chaude, selon l'une quelconque des revendications 1 à 14.

## Claims

1. Generator device (10) for generating at least one jet of a drink, especially a hot drink, comprising a pressurised water production unit, a support (11) equipped to carry a permeable pocket (12) to let through the water, containing a substance to be infused or dissolved to produce an infusion or a solution of this substance when the pressurised water passes through the pocket (12), a collector (18) for the pressurised infusion or solution, and means (21) of propelling the infusion or solution into a receptacle, **characterised in that** it contains a generator (20) for at least one cyclonic jet positioned between the said collector (18) for the infusion or solution and the said means (21) for pouring the infusion or solution into a receptacle.

2. Device according to Claim 1, **characterised in that** the said generator (20) of at least one cyclonic jet contains a central cavity (24), at least partly cylindrical, delimited by a lateral wall and a bottom, the lateral wall defining at least one passage (32) for a pressurised jet of the infusion or solution penetrating the said cavity (24), this passage (32) being directed towards the side of the lateral wall opposite the side on which it is located to generate the cyclonic jet.

3. Device according to Claim 1 **characterised in that** the pressure of the water is at least substantially equal to 0.5 bar.

4. Device according to claim 2, **characterised in that** the bottom of the central cavity is equipped with a circular opening (25) substantially at the centre for discharging the cyclonic jet towards the means (21) of pouring the infusion or soluflon into a receptacle.

5. Device according to Claim 4, **characterised in that** the said circular central opening (25) in the at least partly cylindrical cavity (24) is arranged so as to discharge the cylindrical jet according to an angle of opening substantially between 60 and 150 degrees and preferably about 120 degrees.

6. Device according to Claims 1 and 4, **characterised in that** the means (21) of pouring the infusion or solution into a receptacle comprises a substantially cylindrical pipe (22) with a lateral wall adapted to reflect the cyclonic jet at the exit from the circular central opening (25).

7. Device according to Claim 6, **characterised in that** the length of the said pipe (22) is arranged so that the cyclonic jet is reflected at least once before being poured into the receptacle.

8. Device according to Claim 7, **characterised in that** the length of the pipe (22) is defined according to the desired number of reflections of the cyclonic jet, this number of reflections being determined on the basis of the size desired for the foam bubbles.

9. Device according to Claim 2, **characterised in that** the passage (32) into the lateral wall of the generator (20) adapted to generate the cyclonic jet has a longitudinal axis clearly parallel to the axis of the circular central opening (25).

10. Device according to Claim 2 **characterised in that** the passage (32) into the lateral wall of the generator (20) adapted to generate the cyclonic jet has a longitudinal axis that forms an acute angle with the axis of the circular central opening (25).

11. Device according to Claim 2, **characterised in that** the lateral wall of the generator (20) adapted to generate the cyclonic jet defines at least two opposing passages (33) for two pressurised jets of the infusion or solution, these two jets being substantially opposed and extending through the central cavity (24), each of the passages (33) being directed towards the opposite side from the side of the parallel wall on which it is located to combine its effect with that of the other passage and generate the cyclonic jet.

12. Device according to Claim 11, **characterised in that** each of the two substantially opposed jets generated by the opposing passages (33) is directed towards the opposite side from the side of the parallel wall on which it is generated at an acute angle, the lateral wall of the cavity (24) being adapted to reflect these substantially opposed jets in a substantially symmetrical way in relation to the circular ventral opening (25) placed at the bottom of the generator (20).

13. Device according to Claims 1 and 2, **characterised in that** the generator (20) of at least one cyclonic jet is mounted on the support (11) of the pocket (12) containing the substance to be infused or dissolved, this support (11) containing a cylindrical centre (30) partly sunk into the central cavity (24) of the generator (20) equipping at least two passages (32) in the lateral wall of the said generator, these passages being substantially symmetrical in relation to the circular central opening (25) and communicating on one hand with at least one opening in the collector (18) for the infusion or solution and on the other hand with at least two channels (33) placed in the bottom of the generator (20) and opening into the circular central cavity (25).

14. Device according to Claim 1, **characterised in that** the bottom (13) of the support (11) of the pocket (12) to be infused comprises an elastic substance capable of distorting under the pressure applied to the pocket during the infusion process.

15. Drinks dispenser equipped with a generator device (10) for generating at least one jet of a drink, especially a hot drink, according to any one of Claims 1 to 14.

## Patentansprüche

1. Vorrichtung (10) zur Erzeugung mindestens eines Strahles eines Getränkes, insbesondere eines Warmgetränkes, die eine Einheit zur Erzeugung von druckbeaufschlagtem Wasser, einen Träger (11), der zum Tragen einer für das Wasser durchlässigen Tasche (12) angeordnet ist, die eine Substanz zum Aufgießen oder zum Auflösen enthält, um einen Aufguss oder eine Lösung der Substanz beim Durchgang des druckbeaufschlagten Wassers durch die Tasche (12) zu erzeugen, einen Sammler (18) für den Aufguss oder die druckbeaufschlagte Lösung, und Einrichtungen (21) zum Treiben des Aufgusses oder der Lösung in einen Behälter aufweist,
**dadurch gekennzeichnet, dass**
sie einen Generator (20) mindestens eines Zyklonstrahls aufweist, der zwischen dem Sammler (18) des Aufgusses oder der Lösung und den Einrichtungen (21) zum Ausgießen des Aufgusses oder der Lösung in einen Behälter zwischengeschaltet ist.

2. Vorrichtung nach Anspruch 1,
**dadurch gekennzeichnet, dass**
der Generator (20) mindestens eines Zyklonstrahles einen mindestens teilweise zylindrischen, mittigen Hohlraum (24) aufweist, der durch eine Seitenwand und einen Boden begrenzt ist, wobei die Seitenwand mindestens einen Durchgang (32) für einen druckbeaufschlagten Strahl des Aufgusses oder der Lösung festlegt, der in den Hohlraum (24) eindringt, wobei der Durchgang (32) in Richtung der Seite der Seitenwand ausgerichtet ist, die derjenigen entgegengesetzt ist, auf der er sich befindet, um den Zyklonstrahl zu erzeugen.

3. Vorrichtung nach Anspruch 1,
**dadurch gekennzeichnet, dass**
der Wasserdruck mindestens praktisch gleich 0,5 bar ist.

4. Vorrichtung nach Anspruch 2,
**dadurch gekennzeichnet, dass**
der Boden des mittigen Hohlraumes mit einer praktisch mittigen, kreisförmigen Öffnung (25) versehen ist, um den Zyklonstrahl in Richtung der Einrichtungen (21) zum Ausgießen des Aufgusses oder der Lösung in einen Behälter freizugeben.

5. Vorrichtung nach Anspruch 4,
**dadurch gekennzeichnet, dass**
die mittige, kreisförmige Öffnung (25) des mindestens teilweise zylindrischen Hohlraumes (24) angeordnet ist, um den Zyklonstrahl entsprechend einem praktisch zwischen einschließlich 60 und 150 Grad, und vorzugsweise in der Nähe von 120 Grad liegenden Öffnungswinkel freizugeben.

6. Vorrichtung nach den Ansprüchen 1 und 4,
**dadurch gekennzeichnet, dass**
die Einrichtungen (21) zum Ausgießen des Aufgusses oder der Lösung in einen Behälter eine praktisch zylindrische Düse (22) aufweisen, die eine Seitenwand aufweist, die zur Reflexion des Zyklonstrahles zu dem Ausgang der mittigen kreisförmigen Öffnung (25) angeordnet ist.

7. Vorrichtung nach Anspruch 6,
**dadurch gekennzeichnet, dass**
die Länge der Düse (22) derart ist, dass der Zyklonstrahl mindestens ein Mal reflektiert wird bevor er in den Behälter ausgegossen wird.

8. Vorrichtung nach Anspruch 7,
**dadurch gekennzeichnet, dass**
die Länge der Düse (22) in Abhängigkeit von der Anzahl gewünschter Reflexionen des Zyklonstrahles festgelegt wird, wobei die Anzahl von Reflexionen ab der gewünschten Größe von Schaumblasen festgelegt wird.

9. Vorrichtung nach Anspruch 2,
**dadurch gekennzeichnet, dass**
der Durchgang (32) in der Seitenwand des Generators (20) zur Erzeugung des Zyklonstrahls eine Längsachse aufweist, die praktisch parallel zu der Achse der mittigen kreisförmigen Öffnung (25) verläuft.

10. Vorrichtung nach Anspruch 2,
**dadurch gekennzeichnet, dass**
der Durchgang (32) in der Seitenwand des Generators (20) zur Erzeugung des Zyklonstrahls eine Längsachse aufweist, die einen spitzen Winkel mit der Achse der mittigen, kreisförmigen Öffnung (25) ausbildet.

11. Vorrichtung nach Anspruch 2,
**dadurch gekennzeichnet, dass**
die Seitenwand des Generators (20) zur Erzeugung des Zyklonstrahls mindestens zwei entgegengesetzte Durchgänge (33) für zwei druckbeaufschlagte Strahlen des Aufgusses oder der Lösung festlegt, wobei die zwei Strahlen einander praktisch entgegengesetzt sind und in den mittigen Hohlraum (24) eintreten, wobei jeder der Durchgänge (33) zu der Seite ausgerichtet ist, die der Seite der Seitenwand entgegengesetzt ist, in der er eingearbeitet ist, um seine Wirkung mit derjenigen des anderen Durchganges zu kombinieren und den Zyklonstrahl zu erzeugen.

12. Vorrichtung nach Anspruch 11,
**dadurch gekennzeichnet, dass**
jeder der zwei praktisch entgegengesetzten Strahlen, die durch die entgegengesetzten Durchgänge (33) erzeugt werden, in Richtung der Seite ausgerichtet wird, die der Seite der Seitenwand entgegengesetzt ist, wo er unter einem spitzen Winkel erzeugt wird, wobei die Seitenwand des Hohlraums (24) angeordnet ist, um die zueinander praktisch entgegengesetzten Strahlen im Verhältnis zu der in den Boden des Generators (20) eingearbeiteten mittigen kreisförmigen Öffnung (25) praktisch symmetrisch zu reflektieren.

13. Vorrichtung nach den Ansprüchen 1 und 2,
**dadurch gekennzeichnet, dass**
der Generator (20) mindestens eines Zyklonstrahls unter dem Träger (11) der Tasche (12) angebracht ist, die eine Substanz zum Aufgießen oder zum Auflösen enthält, wobei der Träger (11) einen zylindrischen Kern (30) aufweist, der teilweise in dem mittigen Hohlraum (24) des Generators (20) in Eingriff steht, indem mindestens zwei Durchgänge (32) in der Seitenwand des Generators eingearbeitet werden, wobei die Durchgänge im Verhältnis zu der mittigen, kreisförmigen Öffnung (25) praktisch symmetrisch sind und einerseits mit mindestens einer in den Sammler (18) des Aufgusses oder der Lösung eingearbeiteten Öffnung und andererseits mit jeweils mindestens zwei in den Boden des Generators (20) eingearbeiteten Kanälen (33) in Verbindung stehen, die in den mittigen kreisförmigen Hohlraum (25) einmünden.

14. Vorrichtung nach Anspruch 1,
**dadurch gekennzeichnet, dass**
der Boden (13) des Trägers (11) der Tasche (12) zum Aufgießen aus einem unter dem während des Aufgießens auf die Tasche ausgeübten Druck verformbaren elastischen Werkstoff besteht.

15. Getränkespender, der mit einer Vorrichtung (10) zur Erzeugung mindestens eines Getränkestrahles, insbesondere eines Warmgetränkes nach einem der Ansprüche 1 bis 14, ausgerüstet ist.
